# EUROPEAN PATENT APPLICATION

(11) **EP 3 031 731 A1**
(43) Date of publication of application: **15.06.2016**
(21) Application number: 15199346.6
(22) Date of filing: 10.12.2015
(51) Int. Cl.: B64D 27/26

(54) **VARIABLE PITCH MOUNTING FOR AIRCRAFT GAS TURBINE ENGINE**

(30) Priority: 12.12.2014 US 201414568555
(71) Applicant: General Electric Company, Schenectady, NY 12345 (US)
(72) Inventor: PRENTICE, Ian Francis, Cincinnati, OH Ohio 45215 (US)
(74) Representative: Williams, Andrew Richard

(57) **Abstract**

An aircraft engine (12) is mounted to an aircraft pylon (56) with a variable pitch mounting system which a includes variable length actuator (152) disposed between the engine and pylon for pitching the engine relative to the pylon. Spaced apart pylon front and rear mounts may pivotably mount (118,120) front and rear stationary engine components of the engine to front and rear mount positions on the pylon. Front and rear linkages (62,64) may vertically suspend the engine from the pylon with pivotable links disposed between pylon front and rear mounts and front and rear stationary engine components. One or more thrust links (126) may be pivotably joined at link rear ends to the pylon rear mount and at the link forward ends to a front support frame. An alternative mounting system may include a support structure cantilevered off the pylon for pivotably supporting the engine and the actuator substantially horizontally disposed between the engine and the pylon. The incidence angle between the engine centerline axis and air streamlines may be adjusted by changing the length of the actuator.

## Description

### BACKGROUND OF THE INVENTION

### FIELD OF THE INVENTION

The present invention relates generally to mounting aircraft engines to aircraft.

### DESCRIPTION OF RELATED ART

Aircraft engines such as gas turbine engines may be mounted to an aircraft at various locations such as the wings, fuselage, or tail. Aircraft engines include gas turbine powered engines, electric engines, hybrid engines, and piston engines. The engine is typically mounted at axially spaced apart forward and aft or front and rear positions by corresponding forward and aft or front and rear mounts for carrying various loads to the aircraft. The loads typically include vertical loads such as the weight of the engine itself, axial thrust loads generated by the engine, lateral loads such as those due to wind buffeting, and roll loads or moments due to rotary operation of the engine. The mounts accommodate both axial and radial thermal expansion and contraction of the engine relative to the supporting pylon.

U.S. Patent No. 5,320,307, entitled "Aircraft Engine Thrust Mount", issued June 14, 1994, and incorporated herein by reference, discloses a gas turbine engine mounted below an aircraft wing to a pylon at its forward end, an intermediate section, and its aft end for transmitting loads to the pylon. Two circumferentially spaced apart elongated thrust links are pivotally joined at forward ends thereof to a conventional fan frame and at opposite aft ends pivotally joined to an aft mount platform at the aft end of the pylon. U.S. Patent No. 7,093,996, entitled "Methods And Apparatus For Mounting A Gas Turbine Engine Aircraft", issued August 22, 2006, and incorporated herein by reference, discloses a single thrust link in an engine mount assembly.

As an aircraft's attitude changes (during take-off rotation for instance) the incidence of the airflow relative to the fan blade leading edge changes at a rate of one per revolution cycle. For an airplane with an open-rotor or unducted fan gas turbine engine or turboprop engine, this poses particularly acute problems. This has two undesirable consequences. Such an engine is disclosed in U.S. Patent No. 4,976,102, entitled "Unducted, Counterrotating Gearless Front Fan Engine", issued December 11, 1990, and incorporated herein by reference. Firstly, the aerodynamic load on each blade will follow with the incidence change creating a cyclic variation in loading on the blade, and a yawing force on the engine. This may require additional strength to resist fatigue in the blades and resist the yawing force in the engine, mounts and aircraft structure. Secondly, the noise generated by the airfoil passing through the air is sensitive to the incidence at the leading edge, a compromise in fan loading and/or efficiency may be required to compensate for the extra noise generated by the non-optimal fan blade leading edge incidence over parts of the circular path of the blade. This leads to higher fuel consumption and/or weight.

Certain types and geometries of engine inlets allow the rotation of the aircraft to cause separation of the airflow in local regions of the inlet adversely affecting engine performance, and requiring additional robustness in the downstream airfoils to resist the fatigue loads induced by the separated airflow region.

Thus, there is a need to eliminate and/or reduce these problems associated with an aircraft's attitude changes (during take-off rotation for instance) and the resulting change in the incidence of the airflow relative to the fan blade leading edge changes.

### SUMMARY

An aircraft engine having an engine centerline axis and pivotably mounted to an aircraft pylon by a variable pitch mounting system for mounting the aircraft engine to the pylon at a variable tilt or pitch angle. A variable length actuator is operably disposed between the engine and the pylon for pitching or pivoting the entire engine and the entire engine centerline axis relative to the pylon.

The engine may be an aircraft gas turbine engine and the variable pitch mounting system includes axially spaced apart pylon front and rear mounts pivotably connecting or mounting front and rear stationary engine components of the engine to front and rear mount positions respectively on the pylon and which permit limited axial movement of the engine relative to the pylon. Front and rear linkages vertically suspend the engine from the pylon with pivotable links disposed between the pylon front and rear mounts and the front and rear stationary engine components respectively. The variable pitch mounting system includes a variable length actuator for varying a vertical length of one of the front and rear linkages.

The front and rear stationary engine components may be axially spaced apart stationary front and rear support frames of the engine. One or more thrust links may be pivotably joined at link rear ends to the pylon rear mount and pivotably joined at link forward ends to the front support frame.

The aircraft gas turbine engine may be an unducted or open-rotor counter-rotatable front fan high bypass ratio gas turbine engine including a fan section forward of the pylon, the fan section including counter-rotatable first and second fan blade rows, and the front and rear stationary engine components being axially spaced apart stationary front and rear support frames of the engine. The variable length actuator may be operably disposed in the rear linkage for varying the vertical length of the rear linkage.

The aircraft gas turbine engine may be a ducted gas turbine engine including a fan section forward of the pylon, the fan section including one or more fan blade rows surrounded by a fan casing, and the front and rear stationary engine components being axially spaced apart stationary front and rear support frames of the engine. The variable length actuator may be operably disposed in the rear or front linkage for varying the vertical length of the rear or front linkage respectively.

The variable pitch mounting system may include a four or more bar linkage for connecting the engine to the pylon and allowing limited axial movement of the engine relative to the pylon and four bars of the four or more four bar linkage includes one of the front and rear linkages, the one or more thrust links, and the engine, and the pylon.

The variable pitch mounting system may include a support structure cantilevered off the pylon and pivotably supporting the engine, the variable length actuator substantially axially disposed between the engine and the pylon, and the variable pitch mounting system operably disposed for pitching or pivoting the entire engine and the entire engine centerline axis relative to the pylon by extending and retracting substantially axially with respect to the pylon. The support structure may include a support frame cantilevered off and connected to the pylon by laterally or circumferentially spaced apart first and second aft sets of structural struts. Laterally or circumferentially spaced apart first and second forward sets of structural struts may pivotably connect the engine to the support frame. Laterally or circumferentially spaced apart first and second forward sets of structural struts may be fixedly connected at strut aft ends to the support frame and pivotably connected at strut forward ends to laterally or circumferentially spaced apart first and second pivotable points respectively on the engine. The variable length actuator may be pivotably connected at actuator aft ends to the support frame and pivotably connected at actuator forward ends to second points on the engine. The first and second points may be radially spaced apart with respect to the engine centerline axis.

A method of pitching an aircraft gas turbine engine pivotably mounted to an aircraft pylon includes changing a length of a variable length actuator disposed between the aircraft gas turbine engine and the pylon and changing or adjusting an incidence angle between an engine centerline axis and incoming air streamlines while maintaining the engine centerline axis straight. The pitching may include setting a pitch angle measured between the engine centerline axis and a horizontal of the pylon.

The method may further include using the variable length actuator for varying a length of one of front and rear linkages vertically suspending the engine from the pylon with pivotable links disposed between the pylon front and rear mounts and the front and rear stationary engine components respectively. The front and rear stationary engine components may be axially spaced apart stationary front and rear support frames in the engine.

The pitching may be performed during aircraft take-off roll just before the aircraft leaves the ground or runway as the aircraft and the pylon pitch or rotate upwardly and an aircraft nose rises or pitches upwardly while rear wheels of the aircraft remain on the ground creating an aircraft angle of attack and the aircraft, pylon, and engine have a motion that is substantially horizontal.

The pitching may be performed during aircraft climb after leaving the ground or runway as the aircraft and the pylon pitch or rotate downwardly and an angle of attack decreases from the angle of attack during aircraft take-off roll just before the aircraft leaves the ground or runway.

### BRIEF DESCRIPTION OF THE DRAWINGS

The foregoing aspects and other features of the invention are explained in the following description, taken in connection with the accompanying drawings where:
FIG. 1 is a schematic cross-sectional view illustration of a tiltable aircraft gas turbine engine having engine pylon mounting forward and aft linkages with an aft actuator for connecting the aft linkage to a pylon;
FIG. 2 is an enlarged schematic cross-sectional view illustration of the aft linkage and the aft actuator connecting the aft linkage to the pylon illustrated in FIG. 2;
FIG. 3 is a schematic view illustration of 0 degree of incidence of airflow to a tiltable unducted counter-rotatable aircraft gas turbine engine in an untilted position;
FIG. 4 is a schematic view illustration of the engine illustrated in FIG. 3 in a tilted position;
FIG. 5 is a schematic view illustration of the engine illustrated in FIG. 3 in a second tilted position;
FIG. 6 is a diagrammatical perspective view illustration of engine pylon mounting forward and aft linkages with an aft actuator for connecting the aft linkage to a pylon;
FIG. 7 is a diagrammatical perspective view illustration of engine pylon mounting forward and aft linkages with a forward actuator for connecting the forward linkage to a pylon;
FIGS. 8A-8C are diagrammatical side view illustrations of an actuator at three different vertical lengths;
FIG. 9 is a diagrammatical side view illustration of a ducted fan aircraft gas turbine engine mounted with an aft actuator for connecting an aft linkage to a pylon;
FIG. 10 is a diagrammatical side view illustration of a ducted fan aircraft gas turbine engine mounted with a front actuator for connecting a front linkage to a pylon;
FIG. 11 is a diagrammatical side view illustration of an unducted or open-rotor single fan rotor aircraft gas turbine engine cantilevered off a pylon;

### DETAILED DESCRIPTION OF THE INVENTION

Embodiments described herein are described in connection with ducted fan and open-rotor aircraft gas turbine engines. Examples include an unducted counter-rotatable front fan high bypass ratio engine, or UDF.

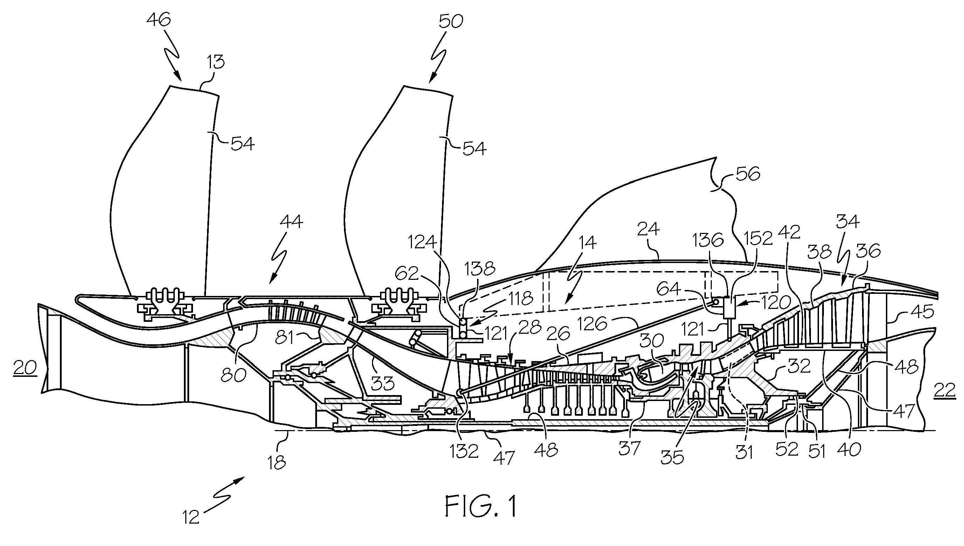

Illustrated in FIG. 1 is an exemplary aircraft gas turbine engine 12 and, more particularly, an unducted counter-rotatable front fan high bypass ratio gas turbine engine 12, also referred to herein as an open-rotor gas turbine engine. Unducted and open-rotor engines have open-fan blade tips 13 that are not radially outwardly bounded or surrounded by any fan casing or nacelle. The engine 12 is circumscribed about an engine centerline axis 18 and suitably designed to be mounted to a wing or fuselage of an aircraft (not shown) by a pylon 56. The engine 12 extends aftwardly or downstream from a forward or upstream end 20 and aft or downstream end 22 of the engine 12. Engine 12 includes an outer casing 24 disposed co-axially about centerline axis 18. The outer casing conventionally referred to as a nacelle is nonstructural in that it does not support any of the engine components. It can therefore be constructed of thin sheet metal such as aluminum and/or composite material.

A fan section 44 at a forward part of the engine 12 forward of the pylon 56 includes a first fan blade row 46 connected to a forward end of a counter-rotatable inner drive shaft 47 which extends between a power turbine 34 and the front fan section 44. The fan section 44 also includes a second fan blade row 50 connected to a forward end of an outer drive shaft 48 connecting the power turbine 34 and the fan section 44. Each of the first and second fan blade rows 46, 50 includes a plurality of circumferentially spaced airfoils 54 or fan blades. The first and second fan blade rows 46, 50 are counter-rotatable which provides a high propulsive efficiency. The counter-rotatable second fan blade row 50 removes swirl in the circumferential component of air imparted by the counter-rotatable first fan blade row 46. The engine 12 further includes a gas generator referred to as core engine 26, which includes in downstream serial flow communication, a high pressure compressor 28, a combustor 30 and a high pressure turbine 35. The HPT or high pressure turbine 35 is joined by a high pressure drive shaft 37 to the high pressure compressor 28. Combustion gases are discharged from the core engine 26 through a diffuser section 31 into a power turbine 34.

The power turbine 34 includes an annular outer drum rotor 36 rotatably mounted on a rear support frame 32. The outer drum rotor 36 includes a plurality of first turbine blade rows 38 extending radially inward therefrom and axially spaced from each other. The power turbine 34 also includes an annular inner drum rotor 40 disposed radially inwardly of outer drum rotor 36 and includes a plurality of second turbine blade rows 42 extending radially outwardly therefrom and axially spaced from each other.

A rotating frame support 45 provides the support for the outer drum rotor 36 and first turbine blade rows 38. The rotating frame support 45 is carried by the rear support frame 32. Extending from the rotating frame support 45 is the inner drive shaft 47 and the co-axial outer drive shaft 48 is connected to the inner drum rotor 40. Differential inner and outer bearing sets 51, 52 are disposed between the counterrotating inner and outer drive shafts 47, 48.

The core engine 26 is supported by two axially spaced apart stationary components illustrated herein as a front support frame 33 and the rear support frame 32. The core engine 26 generates combustion gases. Pressurized air from the high pressure compressor 28 is mixed with fuel in combustor 30 and ignited, thereby, generating the combustion gases. Some work is extracted from these gases by high pressure turbine 35 which drives the high pressure compressor 28. The remainder of the combustion gases are discharged from the core engine 26 through the diffuser section 31 into the power turbine 34 to drive the counter-rotatable first and second fan blade rows 46, 50.

A first rotating frame 80 includes a plurality of struts having aerodynamic shapes acting as blades to compress and supports the first fan blade row 46 as well as outer booster case and blades. The first rotating frame 80 is rotatably supported by the stationary front support frame 33. A second rotating frame 81, similarly constructed as the first frame 80, supports the second fan blade row 50. The first and second rotating frames 80, 81 counter-rotate with respect to each other.

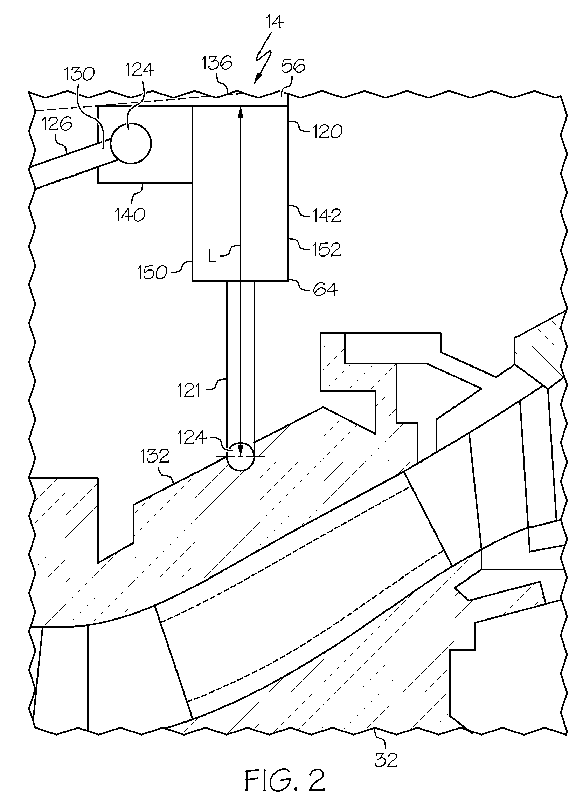

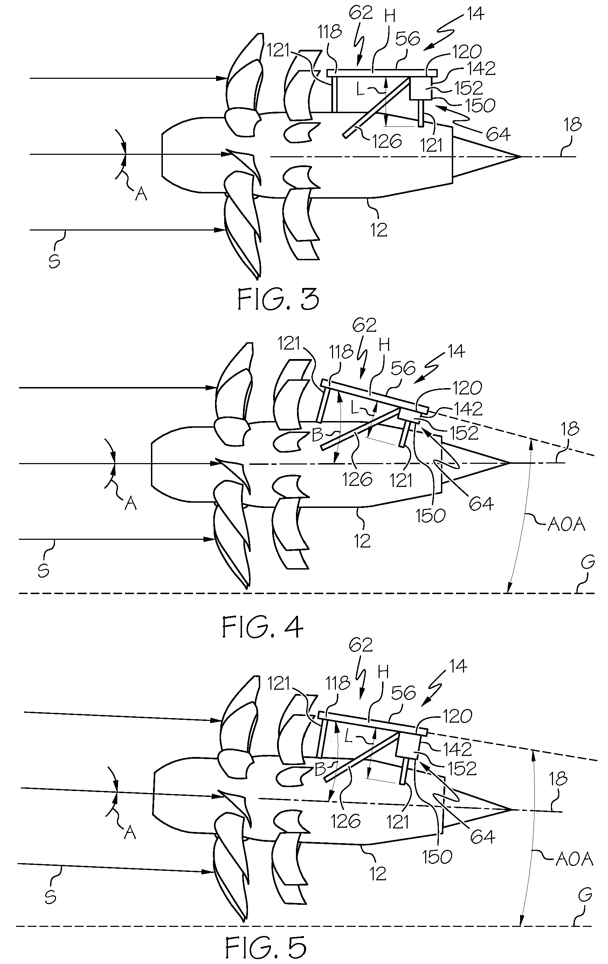

Referring to FIGS. 1 and 2, the engine 12 is pivotably mounted to the pylon 56 by a variable pitch mounting system 14 for mounting the engine 12 to the pylon 56 at a variable tilt or pitch angle B as may be measured between the engine centerline axis 18 and a horizontal H of the pylon 56 as illustrated in FIGS. 4 and 5. The variable pitch mounting system 14 includes a pylon front mount 118 and a pylon rear mount 120 spaced axially aft or downstream from the pylon front mount 118. The pylon front mount 118 connects or mounts the front support frame 33 of the engine 12 to a front mount position 138 on the pylon 56. The pylon rear mount 120 connects or mounts the rear support frame 32 of the engine 12 to a rear mount position 136 on the pylon 56.

Front and rear linkages 62, 64 vertically suspend the engine 12 from the pylon with pivotable links 121 disposed between the pylon front and rear mounts 118, 120 and the front and rear support frames 33, 32 respectively. The front and rear linkages 62, 64 provide the only vertical support for the engine 12 from the pylon 56. The pivotable links 121 connect the pylon 56 and the front and rear support frames 33, 32 with pivotable joints 124 and provide pivotable vertical support for the engine 12 at the pylon front and rear mounts 118, 120.

One or two thrust links 126 for reacting thrust generated by the engine 12 may be connected to the pylon rear mount 120. The thrust links 126 are joined with pivotable joints 124 at link rear ends 130 to the rear mount 120 and with pivotable joints 124 at link forward ends 132 to the front support frame 33. Thrust or axial load is taken through the thrust links 126 to a thrust rear mount 140 which may be connected to the pylon rear mount 120. The variable pitch mounting system 14 provides what may be described as a four bar linkage for connecting the engine 12 to the pylon 56 and allowing limited axial movement of the engine 12 relative to the pylon 56. The four bars of the four bar linkage are one of the front and rear linkages 62, 64, the one or more thrust links 126, the engine 12, and the pylon 56.

Referring to FIGS. 3-5, the rear linkage 64 may be a variable length linkage 142 having a variable length actuator 152 for varying a length L of the rear linkage 64 or variable length linkage 142 between the pylon rear mount 120 and the rear support frame 32. The variable length linkage 142 allows the engine 12 and its engine centerline axis 18 to be tilted or pitched at the pitch angle B relative to the pylon 56 or wing (not shown) to which the pylon 56 is attached as illustrated in FIGS. 4-5. This provides a method to tilt the engine 12 and change or adjust an incidence angle A as may be measured between the engine centerline axis 18 and incoming air streamlines S while maintaining the engine centerline axis 18 straight. The engine and aircraft would ideally be operated with the incidence angle A maintained at 0 degrees.

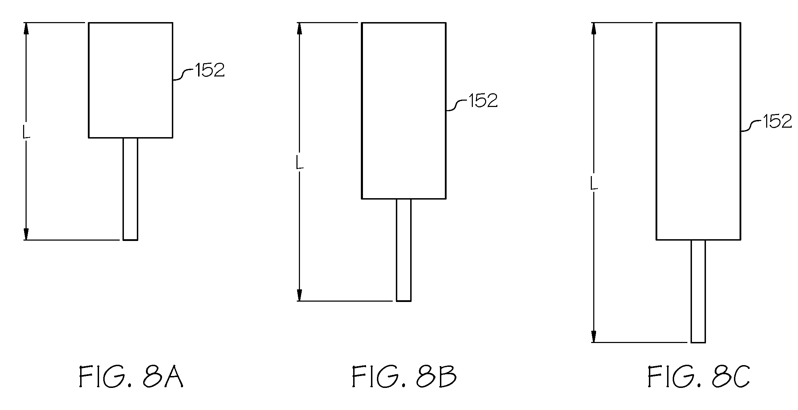

The method preferably allows the incidence angle A to be maintained within narrow limits even as the aircraft angle of attack AOA is changed, as occurs during take-off and landing. The variable length actuator 152 is illustrated herein as a being vertically disposed between the pylon rear mount 120 and the pivotable links 121 pivotably connected to the rear support frame 32. The variable length actuator 152 is illustrated in an unextended mode in FIGS. 3 and 8B, in an extended mode in FIGS. 4 and 8C, and in a retracted mode in FIGS. 5 and 8A. The variable pitch mounting system 14 may be used to vary the pitch angle B, as measured between the engine centerline axis 18 and a pylon horizontal H of the pylon 56, in a range of about 0 - 15 degrees. The goal of using the variable pitch mounting system 14 to vary the pitch angle B is to maintain the incoming air streamlines S parallel to the engine centerline axis 18 during different phases of the aircraft's operation.

Illustrated in FIG. 3 is the aircraft at typical cruise or at an initial part of a take-off roll. The pylon 56 is parallel to the engine centerline axis 18. FIG. 4 illustrates the engine 12 and the aircraft just before leaving the ground G or runway as the aircraft and the pylon 56 pitch or rotate upwardly and the aircraft nose rises or pitches upwardly while rear wheels of the aircraft remain on the ground creating a high aircraft angle of attack AOA. The aircraft, pylon 56, and engine 12 still have a motion that is essentially horizontal. The aircraft and pylon 56 are pitched at the pitch angle B relative to the engine centerline axis 18 and the ground or runway. Using the actuator to set the pitch angle B allows the incoming air to remain parallel to the engine centerline axis 18 or at a substantially 0 degree incidence angle A.

Illustrated in FIG. 5 is the aircraft at typical climb conditions after the take-off roll. After leaving the ground, the aircraft continues to accelerate and climb, the angle of attack AOA decreases and the incoming air streamlines S start to angle downwards towards the ground G due to climbing. The actuator allows the incoming air to remain parallel to the engine centerline axis 18 or at a substantially 0 degree incidence angle A.

The variable pitch mounting system 14 may be used during descent of the aircraft in which the aircraft may adopt a slightly nose down attitude. The variable pitch mounting system 14 may allow a slight adjustment to keep the incoming air streamlines S parallel to the engine centerline axis 18. At approach to landing, the aircraft may pitch nose up to maintain lift at low speed. In this case, maintaining streamline/centerline axis alignment by using the variable length actuator 152 will reduce the fan noise generated in the region around the airport. Touchdown occurs still with the nose up, returning to horizontal just after the main gear touches the runway, at this point the engines should be moved back in the horizontal configuration (centerline axis 18 parallel to the pylon horizontal H of the pylon 56) ready for reverse thrust.

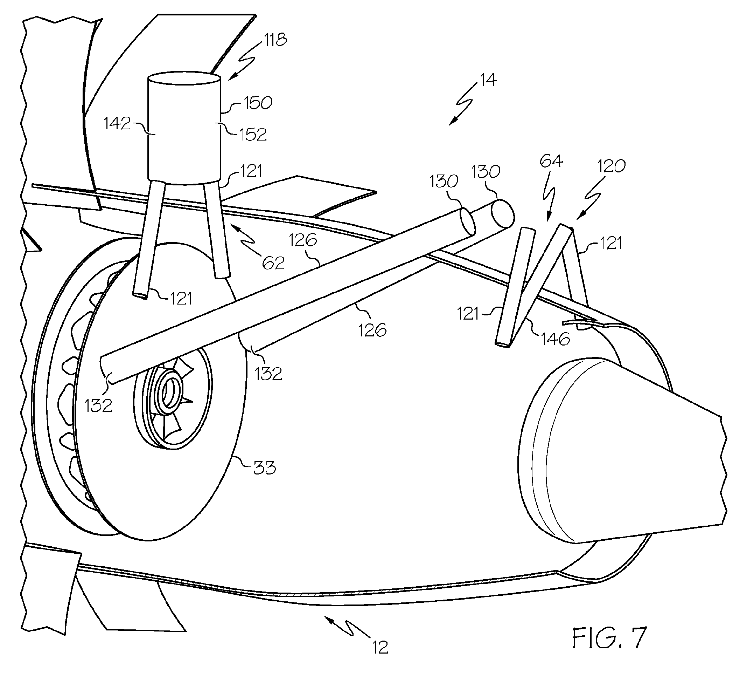

Schematically illustrated in FIG. 7 is an alternate embodiment of a variable pitch mounting system 14 with the front linkage 62 being the variable length linkage 142. The variable length linkage 142 includes the variable length actuator 152 for varying the vertical length L of the front linkage 62 or variable length linkage 142 between the pylon front mount 118 and the front support frame 33. The length actuator 152 is disposed between the pylon front mount 118. Pivotable links 121 pivotably connect the variable length actuator 152 to the front support frame 33.

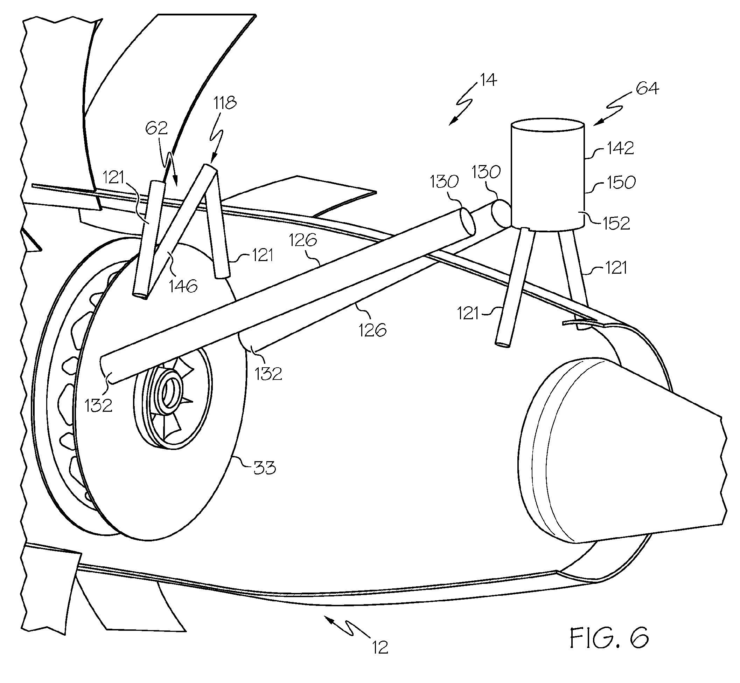

The exemplary embodiment of the variable pitch mounting system 14 illustrated in FIG. 6 restrains rotation around the engine centerline axis 18 with an anti-rotation link 146 between the pivotable links 121 between the pylon and the front mount 118. The exemplary embodiment of the variable pitch mounting system 14 illustrated in FIG. 7 restrains rotation around the engine centerline axis 18 with the anti-rotation link 146 between the pivotable links 121 between the pylon and the rear mount 120. The anti-rotation link 146 is mounted with a tangential orientation. For the engine to be mounted to prevent any relative motion, it must be constrained in 6 degrees of freedom, axial, vertical and lateral translations and rotations about axial vertical and horizontal axes. The mounts are generally set up to provide these constraints redundancy in the event of a single failure, but not over-constrain the engine which would prevent relative thermal expansion. The angled anti-rotation link 146 constrains lateral displacement (1 degree of freedom). Together with the two vertical pivotable links 121 between the pylon 56 and the front and rear support frames 33, 32 at the same axial location along the engine, they prevent rotation about the engine centerline axis 18 (2 degree of freedom).

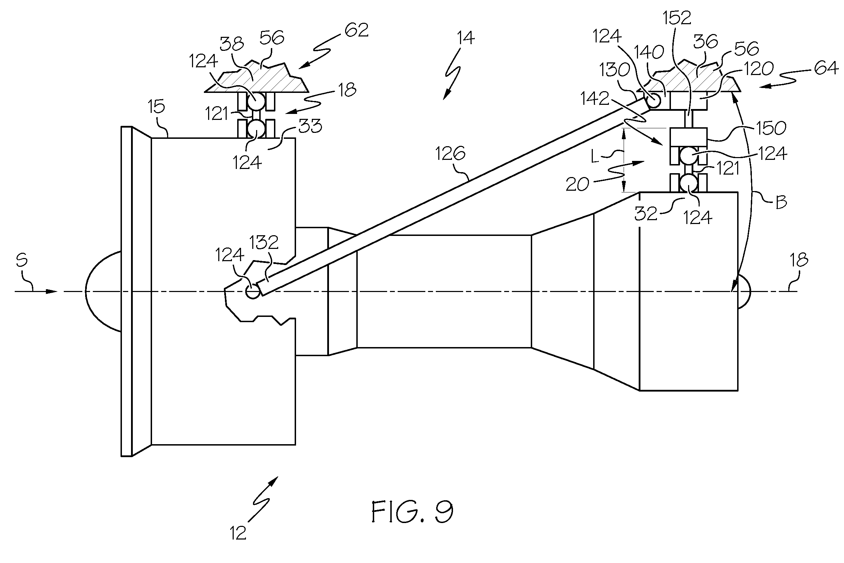

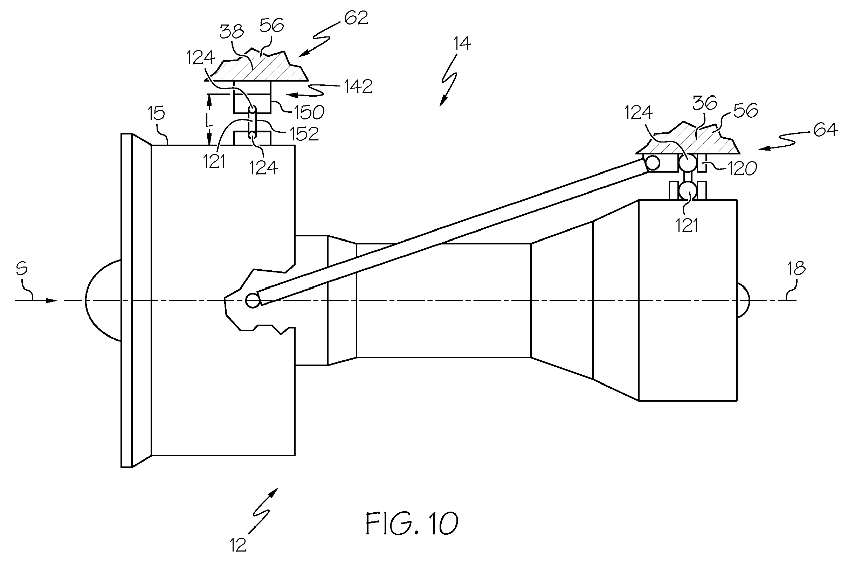

Illustrated in FIGS. 9 and 10 is an exemplary ducted fan aircraft gas turbine engine 12 mounted with a variable pitch mounting system 14. The ducted engine includes fan blades with blade tips radially outwardly bounded or surrounded by a fan casing 15. The engine 12 is circumscribed about an engine centerline axis 18 and suitably designed to be mounted to a wing or fuselage of an aircraft (not shown) by a pylon 56. The engine 12 is mounted to the pylon 56 by a variable pitch mounting system 14 for mounting the engine 12 to the pylon 56 at a variable tilt or pitch angle B as may be measured between the engine centerline axis 18 and the pylon 56. The variable pitch mounting system 14 includes a pylon front mount 118 and a pylon rear mount 120 spaced axially aft or downstream from the pylon front mount 118. The front mount 118 connects or mounts a front support frame 33 of the engine 12 to a front mount position 138 on the pylon 56. The rear mount 120 connects or mounts a rear support frame 32 of the engine 12 to a rear mount position 136 on the pylon 56. Front and rear linkages 62, 64 include pivotable links 121 disposed between the pylon front and rear mounts 118, 120 and the front and rear support frames 33, 32 respectively and provide vertical support for the engine 12.

The pivotable links 121 between the pylon 56 and the front and rear support frames 33, 32 provide pivotable vertical support for the engine 12 at the pylon front and rear mounts 118, 120. One or two thrust links 126 for reacting thrust generated by the engine 12 may be connected to the pylon rear mount 120. The thrust links 126 are joined at link rear ends 130 to the rear mount 120 and at link forward ends 132 to the front support frame 33. Thrust or axial load is taken through the thrust links to a thrust rear mount 140 which may be connected to the pylon rear mount 120.

The embodiment of the variable pitch mounting system 14 illustrated in FIG. 9 incudes the rear linkage 64 being a variable length linkage 142 and the embodiment of the variable pitch mounting system 14 illustrated in FIG. 10 includes the front linkage 62 being a variable length linkage 142. Referring to FIG. 9, the variable length linkage 142 includes a variable length actuator 152 for varying a vertical length L of the rear linkage 64 or variable length linkage 142 between the pylon rear mount 120 and the rear support frame 32. The variable length linkage 142 allows the engine 12 and its engine centerline axis 18 to be tilted or pitched relative to the pylon 56 or wing (not shown) to which the pylon 56 is attached. This provides a method to tilt pitch the engine 12 and change an incidence angle A of the engine relative to the incoming air streamlines S to be maintained within narrow limits even as the aircraft angle of attack AOA is changed, as occurs during take-off and landing. The variable length actuator 152 is disposed between the pylon rear mount 120 and the pivotable links 121 pivotably connected to the rear support frame 32.

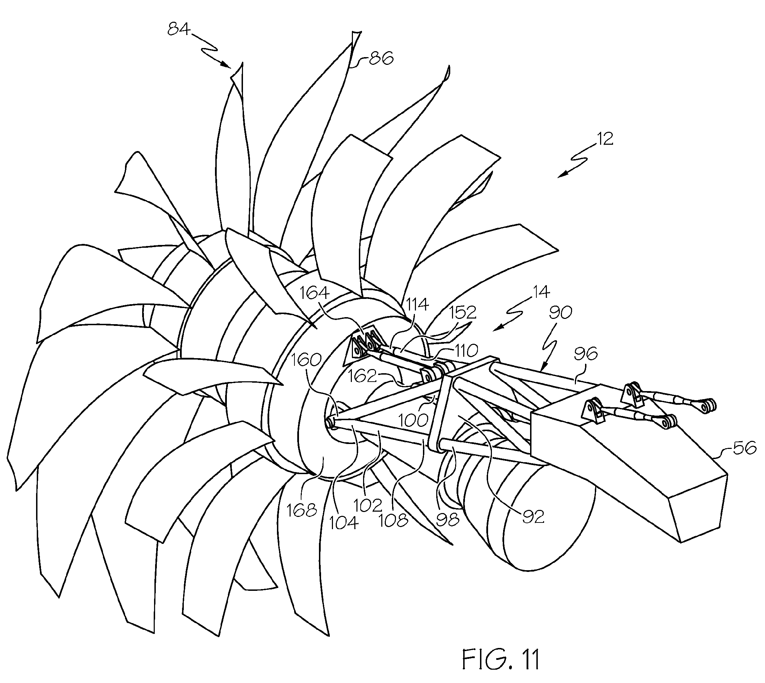

Illustrated in FIG. 11 is an exemplary ducted fan aircraft gas turbine engine 12 cantilever mounted to a pylon 56 with a variable pitch mounting system 14. The unducted or open-rotor single fan rotor aircraft gas turbine engine 12 has a single row 84 of fan blades 86. The variable pitch mounting system 14 includes a support structure 90 cantilevered off the pylon 56 connects and pivotably supports the engine 12. A support frame 92 of the cantilever support structure 90 is cantilevered off and connected to the pylon 56 by laterally or circumferentially spaced apart first and second aft sets of structural struts 96, 98. The engine 12 is pivotably connected to the support frame 92 by laterally or circumferentially spaced apart first and second forward sets of structural struts 100, 102.

The first and second forward sets of structural struts 100, 102 are fixedly connected at strut aft ends 108 to the support frame 92 and pivotably connected at strut forward ends 104 to laterally or circumferentially spaced apart first and second pivotable points 160, 162 respectively on the engine 12. One or more variable length actuators 152 (two are illustrated in FIG. 11) may be pivotably connected at actuator aft ends 110 to the support frame 92 and pivotably connected at actuator forward ends 114 to actuator attachment points 164 on the engine 12. The first and second pivotable points 160, 162 are radially spaced apart from the actuator attachment points 164 with respect to the engine centerline axis 18. The first and second pivotable points 160, 162 and the actuator attachment points 164 may be on an engine frame 168. The variable length actuators 152 are substantially axially mounted and extend and retract substantially axially with respect to the pylon 56. Two or more actuators provides redundancy. The variable length actuators 152 extend substantially axially between the fan frame 168 and the support frame 92.

The cantilevered variable pitch mounting system 14 illustrated in FIG. 11 may be used to mount and pitch various types of aircraft engines. Aircraft gas turbine engines have been used herein to illustrate various embodiments of the variable pitch mounting system 14 as illustrated in the FIGS. Other types of aircraft engines, including electric engines, hybrid engines, and piston engines, may also use the variable pitch mounting system 14 illustrated herein to mount the engine to a pylon. A hybrid engine, for the purpose of this patent is an engine which combine motive power sources such as a conventional gas turbine and an electric motor.

The present invention has been described in an illustrative manner. It is to be understood that the terminology which has been used is intended to be in the nature of words of description rather than of limitation. While there have been described herein, what are considered to be preferred and exemplary embodiments of the present invention, other modifications of the invention shall be apparent to those skilled in the art from the teachings herein and, it is, therefore, desired to be secured in the appended claims all such modifications as fall within the true spirit and scope of the invention.

Various aspects and embodiments of the present invention are defined by the following numbered clauses:
1. An assembly comprising:
   an aircraft engine having an engine centerline axis,
   the aircraft engine pivotably mounted to an aircraft pylon by a variable pitch mounting system for mounting the aircraft engine to the pylon at a variable tilt or pitch angle, and
   a variable length actuator operably disposed between the engine and the pylon for pitching or pivoting the entire engine and the entire engine centerline axis relative to the pylon.
2. The assembly as claimed in clause 1 further comprising:
   the aircraft engine being an aircraft gas turbine engine,
   the variable pitch mounting system including axially spaced apart pylon front and rear mounts pivotably connecting or mounting front and rear stationary engine components of the engine to front and rear mount positions respectively on the pylon and which permit limited axial movement of the engine relative to the pylon,
   front and rear linkages vertically suspending the engine from the pylon with pivotable links disposed between the pylon front and rear mounts and the front and rear stationary engine components respectively, and
   the variable length actuator operably disposed in and for varying a vertical length of one of the front and rear linkages.
3. The assembly as claimed in clause 1 or clause 2 wherein the front and rear stationary engine components are axially spaced apart stationary front and rear support frames of the engine.
4. The assembly as claimed in any preceding clause, further comprising one or more thrust links pivotably joined at link rear ends to the pylon rear mount and pivotably joined at link forward ends to the front support frame.
5. The assembly as claimed in any preceding clause, further comprising:
   the aircraft gas turbine engine being an unducted or open-rotor counter-rotatable front fan high bypass ratio gas turbine engine including a fan section forward of the pylon,
   the fan section ncluding counter-rotatable first and second fan blade rows, and
   the front and rear stationary engine components being axially spaced apart stationary front and rear support frames of the engine.
6. The assembly as claimed in any preceding clause, further comprising the variable length actuator being operably disposed in the rear linkage for varying the vertical length of the rear linkage.
7. The assembly as claimed in any preceding clause, further comprising one or more thrust links pivotably joined at link rear ends to the pylon rear mount and pivotably joined at link forward ends to the front support frame.
8. The assembly as claimed in any preceding clause, further comprising:
   the aircraft gas turbine engine being a ducted gas turbine engine including a fan section forward of the pylon,
   the fan section including one or more fan blade rows surrounded by a fan casing, and
   the front and rear stationary engine components being axially spaced apart stationary front and rear support frames of the engine.
9. The assembly as claimed in any preceding clause, further comprising the variable length actuator being operably disposed in the rear linkage for varying the vertical length of the rear linkage.
10. The assembly as claimed in any preceding clause, further comprising one or more thrust links pivotably joined at link rear ends to the pylon rear mount and pivotably joined at link forward ends to the front support frame.
11. The assembly as claimed in any preceding clause, further comprising the variable length actuator being operably disposed in the front linkage for varying the vertical length of the front linkage.
12. The assembly as claimed in any preceding clause, further comprising one or more thrust links pivotably joined at link rear ends to the pylon rear mount and pivotably joined at link forward ends to the front support frame.
13. The assembly as claimed in any preceding clause, further comprising:
   the aircraft gas turbine engine being an unducted or open-rotor single front fan high bypass ratio gas turbine engine including a fan section forward of the pylon,
   the fan section including only a single row of fan blades, and
   the front and rear stationary engine components being axially spaced apart stationary front and rear support frames of the engine.
14. The assembly as claimed in any preceding clause, further comprising the variable length actuator being operably disposed in the rear linkage for varying the vertical length of the rear linkage and one or more thrust links pivotably joined at link rear ends to the pylon rear mount and pivotably joined at link forward ends to the front support frame.
15. The assembly as claimed in any preceding clause, further comprising a four bar linkage connecting the engine to the pylon and allowing limited axial movement of the engine relative to the pylon and four bars of the four bar linkage including one of the front and rear linkages, the one or more thrust links, the engine, and the pylon.
16. The assembly as claimed in any preceding clause, further comprising:
   the variable pitch mounting system including a support structure cantilevered off the pylon pivotably supporting the engine,
   the variable length actuator substantially horizontally disposed between the engine and the pylon, and
   the variable pitch mounting system operably disposed for pitching or pivoting the entire engine and the entire engine centerline axis relative to the pylon by extending and retracting the variable length actuator substantially axially with respect to the pylon.
17. The assembly as claimed in any preceding clause, further comprising:
   the support structure including a support frame cantilevered off and connected to the pylon by laterally or circumferentially spaced apart first and second aft sets of structural struts,
   laterally or circumferentially spaced apart first and second forward sets of structural struts pivotably connecting the engine to the support frame,
   laterally or circumferentially spaced apart first and second forward sets of structural struts fixedly connected at strut aft ends to the support frame and pivotably connected at strut forward ends to laterally or circumferentially spaced apart first and second pivotable points respectively on the engine,
   the variable length actuator being pivotably connected at actuator aft ends to the support frame and pivotably connected at actuator forward ends to second points on the engine, and
   the first and second points being radially spaced apart with respect to the engine centerline axis.
18. The assembly as claimed in any preceding clause, further comprising:
   the aircraft gas turbine engine being a ducted gas turbine engine including a fan section forward of the pylon, and
   the fan section including one or more fan blade rows surrounded by a fan casing.
19. The assembly as claimed in any preceding clause, further comprising the aircraft gas turbine engine being an unducted or open-rotor counter-rotatable front fan high bypass ratio gas turbine engine including a fan section forward of the pylon or the aircraft gas turbine engine being an unducted or open-rotor single fan rotor aircraft gas turbine engine and the fan section a having a single row of fan blades.
20. A method of pitching an aircraft gas turbine engine pivotably mounted to an aircraft pylon by changing a length of a variable length actuator disposed between the aircraft gas turbine engine and the pylon and changing or adjusting an incidence angle between an engine centerline axis and incoming air streamlines while maintaining the engine centerline axis straight.
21. The method as claimed in any preceding clause, wherein the pitching includes setting a pitch angle measured between the engine centerline axis and a horizontal of the pylon.
22. The method as claimed in any preceding clause, further comprising using the variable length actuator for varying a length of one of front and rear linkages vertically suspending the engine from the pylon with pivotable links disposed between the pylon front and rear mounts and the front and rear stationary engine components respectively.
23. The method as claimed in any preceding clause, wherein the front and rear stationary engine components are axially spaced apart stationary front and rear support frames in the engine.
24. The method as claimed in any preceding clause, further comprising performing the pitching during aircraft take-off roll just before the aircraft leaves the ground or runway as the aircraft and the pylon pitch or rotate upwardly and an aircraft nose rises or pitches upwardly while rear wheels of the aircraft remain on the ground creating an aircraft angle of attack and the aircraft, pylon, and engine have a motion that is substantially horizontal.
25. The method as claimed in any preceding clause, further comprising performing the pitching during aircraft climb after leaving the ground or runway as the aircraft and the pylon pitch or rotate downwardly and an angle of attack decreases from the angle of attack during aircraft take-off roll just before the aircraft leaves the ground or runway.
26. The method as claimed in any preceding clause, further comprising:
   varying a length of the variable length actuator which is substantially horizontally disposed between the engine and the pylon,
   wherein the variable pitch mounting system includes a support structure cantilevered off the pylon pivotably supporting the engine, and
   the variable pitch mounting system is operably disposed for pitching or pivoting the entire engine and the entire engine centerline axis relative to the pylon by extending and retracting the variable length actuator substantially axially with respect to the pylon.
27. The method as claimed in any preceding clause, wherein:
   the support structure includes a support frame cantilevered off and connected to the pylon by laterally or circumferentially spaced apart first and second aft sets of structural struts,
   laterally or circumferentially spaced apart first and second forward sets of structural struts pivotably connects the engine to the support frame,
   laterally or circumferentially spaced apart first and second forward sets of structural struts fixedly connected at strut aft ends to the support frame and pivotably connected at strut forward ends to laterally or circumferentially spaced apart first and second pivotable points respectively on the engine,
   the variable length actuator is pivotably connected at actuator aft ends to the support frame and pivotably connected at actuator forward ends to second points on the engine, and
   the first and second points are radially spaced apart with respect to the engine centerline axis.
28. The method as claimed in any preceding clause,, further comprising performing the pitching during aircraft take-off roll just before the aircraft leaves the ground or runway as the aircraft and the pylon pitch or rotate upwardly and an aircraft nose rises or pitches upwardly while rear wheels of the aircraft remain on the ground creating an aircraft angle of attack and the aircraft, pylon, and engine have a motion that is substantially horizontal.
29. The method as claimed in any preceding clause,, further comprising performing the pitching during aircraft climb after leaving the ground or runway as the aircraft and the pylon pitch or rotate downwardly and an angle of attack decreases from the angle of attack during aircraft take-off roll just before the aircraft leaves the ground or runway.

## Claims

1. An assembly comprising:
an aircraft engine (12) having an engine centerline axis (18),
the aircraft engine pivotably mounted to an aircraft pylon (56) by a variable pitch mounting system (14) for mounting the aircraft engine to the pylon at a variable tilt or pitch angle, and
a variable length actuator (152) operably disposed between the engine and the pylon for pitching or pivoting the entire engine and the entire engine centerline axis relative to the pylon.

2. The assembly as claimed in claim 1 further comprising:
the aircraft engine being an aircraft gas turbine engine,
the variable pitch mounting system including axially spaced apart pylon front and rear mounts pivotably connecting or mounting front and rear stationary engine components of the engine to front and rear mount positions respectively on the pylon and which permit limited axial movement of the engine relative to the pylon,
front and rear linkages vertically suspending the engine from the pylon with pivotable links disposed between the pylon front and rear mounts and the front and rear stationary engine components respectively, and
the variable length actuator operably disposed in and for varying a vertical length of one of the front and rear linkages.

3. The assembly as claimed in claim 2 wherein the front and rear stationary engine components are axially spaced apart stationary front and rear support frames of the engine.

4. The assembly as claimed in claim 3 further comprising one or more thrust links pivotably joined at link rear ends to the pylon rear mount and pivotably joined at link forward ends to the front support frame.

5. The assembly as claimed in claim 2 further comprising:
the aircraft gas turbine engine being an unducted or open-rotor counter-rotatable front fan high bypass ratio gas turbine engine including a fan section forward of the pylon,
the fan section ncluding counter-rotatable first and second fan blade rows, and
the front and rear stationary engine components being axially spaced apart stationary front and rear support frames of the engine.

6. The assembly as claimed in claim 5 further comprising the variable length actuator being operably disposed in the rear linkage for varying the vertical length of the rear linkage.

7. The assembly as claimed in claim 5 or claim 6 further comprising one or more thrust links pivotably joined at link rear ends to the pylon rear mount and pivotably joined at link forward ends to the front support frame.

8. The assembly as claimed in claim 2 further comprising:
the aircraft gas turbine engine being a ducted gas turbine engine including a fan section forward of the pylon,
the fan section including one or more fan blade rows surrounded by a fan casing, and
the front and rear stationary engine components being axially spaced apart stationary front and rear support frames of the engine.

9. The assembly as claimed in claim 8 further comprising the variable length actuator being operably disposed in the rear linkage for varying the vertical length of the rear linkage.

10. The assembly as claimed in claim 8 further comprising the variable length actuator being operably disposed in the front linkage for varying the vertical length of the front linkage.

11. The assembly as claimed in claim 9 or claim 10 further comprising one or more thrust links pivotably joined at link rear ends to the pylon rear mount and pivotably joined at link forward ends to the front support frame.

12. The assembly as claimed in claim 2 further comprising:
the aircraft gas turbine engine being an unducted or open-rotor single front fan high bypass ratio gas turbine engine including a fan section forward of the pylon,
the fan section including only a single row of fan blades, and
the front and rear stationary engine components being axially spaced apart stationary front and rear support frames of the engine.

13. The assembly as claimed in claim 12 further comprising the variable length actuator being operably disposed in the rear linkage for varying the vertical length of the rear linkage and one or more thrust links pivotably joined at link rear ends to the pylon rear mount and pivotably joined at link forward ends to the front support frame.

14. The assembly as claimed in claim 4 further comprising a four bar linkage connecting the engine to the pylon and allowing limited axial movement of the engine relative to the pylon and four bars of the four bar linkage including one of the front and rear linkages, the one or more thrust links, the engine, and the pylon.

15. A method of pitching an aircraft gas turbine engine pivotably mounted to an aircraft pylon by changing a length of a variable length actuator disposed between the aircraft gas turbine engine and the pylon and changing or adjusting an incidence angle between an engine centerline axis and incoming air streamlines while maintaining the engine centerline axis straight.
